# EUROPÄISCHE PATENTSCHRIFT

(11) **EP 3 521 648 B1**
(45) Veröffentlichungstag und Bekanntmachung des Hinweises auf die Patenterteilung: **05.08.2020**
(21) Anmeldenummer: 18154424.8
(22) Anmeldetag: 31.01.2018
(51) Int. Cl.: F16D 3/78, F16D 3/79

(54) **LAMELLENKUPPLUNG MIT VERBESSERTEM AXIALVERSATZANSCHLAG UND INDUSTRIEAPPLIKATION**
MULTI-PLATE CLUTCH COMPRISING IMPROVED AXIAL OFFSET STOP AND INDUSTRY APPLICATION
EMBRAYAGE À DISQUES MULTIPLES À BUTÉE EN DÉCALAGE AXIAL AMÉLIORÉ ET APPLICATION INDUSTRIELLE

(43) Veröffentlichungstag der Anmeldung: 07.08.2019
(73) Patentinhaber: Flender GmbH, 46395 Bocholt (DE)
(72) Erfinder: Kleinewegen, Stefan, 46395 Bocholt (DE); Steggemann, Jens, 48703 Stadtlohn (DE)
(74) Vertreter: Maier, Daniel Oliver

(56) Entgegenhaltungen:
- DE-A1- 19 724 772
- DE-A1-102006 009 594
- GB-A- 1 396 200

## Beschreibung

Die Erfindung betrifft eine Lamellenkupplung, die über einen verbesserten Axialversatzanschlag verfügt. Die Erfindung betrifft auch eine Industrieapplikation, die mit einer entsprechenden Lamellenkupplung ausgestattet ist.

Aus DE 1 675 255 A1 ist eine flexible Kupplung bekannt, die flexible Verbindungsglieder umfasst, über die eine Drehmomentübertragung zwischen zwei Flanschen erfolgt. Dazu sind die flexiblen Verbindungsglieder, die als Lamellen ausgebildet sind, über einen Bolzen mit einem ersten Flansch verbunden. Die flexiblen Verbindungsglieder sind dazu zwischen zwei Scheiben angeordnet und sind über eine am Ende des Bolzens angebrachte Mutter verspannt.

US 2,639,595 A offenbart eine Kupplung, die zwei Flansche umfasst, die über flexible Scheiben drehmomentübertragend miteinander verbunden sind. Die flexiblen Scheiben sind dabei über eine Mutter an einer Schraube und eine Kragenspannhülse an einen Flansch angedrückt.

Ferner ist aus DE 197 24 772 A1 eine flexible Kupplung bekannt, die in Luftfahrzeugen eingesetzt wird. Die flexible Kupplung umfasst eine flexible Scheibe, die mit einem Verbindungsbolzen und einer Kronenmutter über aneinander liegende Bolzenbuchsen, die im Wesentlichen als Kragenbuchsen ausgebildet sind, verspannt wird. Die flexible Scheibe ist zwischen zwei Kragen eingeklemmt und so axial positioniert. Ein gegenüberliegendes Flanschauge schlägt bei einer Axialbewegung an einen Kragen einer Bolzenbuchse an.

Das Dokument GB 1 396 200 A offenbart eine Lamellenkupplung, in der zwei Kupplungsflansche über Lamellen miteinander verbunden sind. Die Lamelle ist mittels einer Schraube an einem der Kupplungsflansche fest verbunden. Die Lamelle ist ferner zwischen zwei Scheiben angeordnet und durch mehrere Unterlegscheiben und Ringe gehalten. Eine der Scheiben ist derart angeordnet, dass sich der gegenüberliegend angebrachte Kupplungsflansch bei einer axialen Bewegung an der Scheibe abstützen kann, so dass ein Axialspiel zwischen den beiden Kupplungsflanschen begrenzt wird.

Aus der Offenlegungsschrift DE 10 2006 009 594 A1 ist eine drehsteife biegeelastische Wellenkupplung bekannt, die zumindest ein Lamellenpaket umfasst, das mit einer Nabe verbunden ist. Das Lamellenpaket ist auf einer Bundbuchse aufgesetzt und über einen Ring und eine Unterlegscheibe gegen einen stirnseitigen Bund der Bundbuchse eingeklemmt sind. Eine Schraube, über die das Lamellenpaket mit der Nabe verbunden ist, erstreckt sich durch die Bundbuchse.

In einer Vielzahl an Anwendungen besteht der Wunsch, eine Lamellenkupplung bereitzustellen, die dazu geeignet ist, einen axialen Versatz einer über die Kupplung verbundenen Wellen auszugleichen. Für den auszugleichenden axialen Versatz sind Höchstwerte einzuhalten. Gleichzeitig ist die entsprechende Lamellenkupplung einfach auszubilden. Es besteht somit Bedarf an einer Lamellenkupplung, die zuverlässig eine Kompensation eines Axialversatzes bietet, auch beim Erreichen eines Höchstwertes an Axialversatz zuverlässig funktioniert und einfach und wirtschaftlich herstellbar ist. Der Erfindung liegt die Aufgabe zugrunde, eine Lamellenkupplung bereitzustellen, die in zumindest einem der beschriebenen Aspekte eine Verbesserung bietet.

Die skizzierte Aufgabenstellung wird durch die erfindungsgemäße Lamellenkupplung gelöst. Die Lamellenkupplung umfasst einen ersten und einen zweiten Flansch, die im montierten Zustand gegenüberliegende angeordnet sind. Zwischen dem ersten und zweiten Flansch ist eine Lamelle angeordnet, die dazu ausgebildet ist, den ersten mit dem zweiten Flansch drehmomentübertragend zu verbinden. Die Lamelle ist mit einer ersten Lamellenbohrung versehen, in der eine Schraube aufgenommen ist. Über die Schraube ist die Lamelle mit dem ersten Flansch verspannt, also am ersten Flansch befestigt. Unter einer Schraube ist dabei auch ein Bolzen, eine Passschraube, oder jegliches vergleichbare lösbare Konstruktionselement zu verstehen. An einer Stirnseite oder Stirnfläche der Lamelle, die dem zweiten Flansch zugewandt ist, ist erfindungsgemäß ein Abstandselement angeordnet, das wiederum eine Stirnseite aufweist, die dem zweiten Flansch zugewandt ist. Das Abstandselement ist dazu ausgebildet, bei einer Axialbewegung des zweiten Flansches in Richtung des ersten Flansches, den zweiten Flansch abzustützen. Dazu erfolgt ein Anschlagen des zweiten Flansches an die dem zweiten Flansch zugewandte Stirnseite des Abstandselements. Bei einem Anschlagen des zweiten Flansches an das Abstandselement erfolgt eine Einleitung einer Druckkraft vom zweiten Flansch in die Lamelle über das Abstandselement. Die Axialbewegung des zweiten Flansches ist dabei als eine Änderung eines Axialversatzes zwischen dem ersten und zweiten Flansch aufzufassen.

In einem bestimmungsgemäßen Betriebszustand, in dem zwischen dem Abstandselement und dem zweiten Flansch kein Kontakt vorliegt, ist das Abstandselement entlang der Axialrichtung, also der Richtung der Axialbewegung, im Wesentlichen kräftefrei und spannungsfrei. Die Abmessungen des Abstandselements entlang der Axialrichtung sind konstruktiv in einer breiten Spanne wählbar. Dadurch ist, ausgehend von einem bestimmungsgemäßen Betriebszustand ohne Kontakt zwischen dem Abstandselement und dem zweiten Flansch ein maximaler Axialversatz zwischen diesen wählbar. Ferner ist das Abstandselement in einfacher und platzsparender Form in eine vorhandene Lamellenkupplung einbaubar. Die erfindungsgemäße Lösung ist damit auch bei einer vorhandenen Lamellenkupplung durch ein einfaches Nachrüsten umsetzbar. Das Abstandselement weist insgesamt eine einfache Geometrie auf und ist somit kosteneffizient herstellbar. Insgesamt wird dadurch ein verbesserter Axialversatzanschlag für die Lamellenkupplung bereitgestellt. Erfindungsgemäß ist ferner in der Lamellenkupplung das Abstandselement zwischen der Lamelle und dem zweiten Flansch axial beweglich ausgebildet. Dazu weist das Abstandselement eine geringere axiale Abmessung auf als der Zwischenraum zwischen der Lamelle und dem zweiten Flansch. Damit weist das Abstandselement auch eine geringere axiale Abmessung auf als der Lamellenpaketring, auf dem das Abstandselement radial angeordnet ist. Ferner wird die axiale Beweglichkeit des Abstandselements dadurch gewährleistet, dass in radialer Richtung zwischen dem Lamellenpaketring und dem Abstandselement eine Spielpassung oder Übergangspassung vorliegt. Presspassungen in axialer oder radialer Richtung, die mit hohem Kraftaufwand bei der Montage einhergehen, werden so vermieden. Folglich ist die beanspruchte Lamellenkupplung einfach, schnell und auch im Zuge einer Nachrüstung herstellbar.

In einer Ausführungsform der beanspruchten Lamellenkupplung ist das Abstandselement radial an einem Lamellenpaketring angeordnet. Die Lamelle ist zwischen Lamellenpaketringen angeordnet und zu einem Lamellenpaket gepresst. Bei einem Montieren der Lamellenkupplung werden die Lamellenpakete und die Lamelle an eine Stirnseite des ersten Flansches angedrückt. Häufig überragen Lamellen die Lamellenpaketringe in radialer Richtung, so dass zwischen einer Mantelfläche des Lamellenpaketrings und einer Stirnseite der Lamelle ein Zwischenraum vorliegt. Dieser Zwischenraum wird durch das Abstandselement zumindest teilweise genutzt und so ein kompakter Axialversatzanschlag bereitgestellt. Durch das radiale Anordnen des Abstandselements am Lamellenpaketring weist das Abstandselement eine vergrößerte Stirnfläche auf, die zu einem Anschlagen des zweiten Flansches geeignet ist. Durch die vergrößerte Stirnfläche wird eine Axialkraft, die die Axialbewegung des zweiten Flansches hervorruft, am Abstandselement auf eine größere Fläche verteilt und so wird die vorliegende mechanische Beanspruchung reduziert. Dadurch ist das Abstandselement dazu geeignet, einer hohen Anzahl an Anschlägen durch den zweiten Flansch standzuhalten. Infolgedessen weist die beanspruchte Lamellenkupplung eine erhöhte Lebensdauer auf.

Des Weiteren kann in der beanspruchten Lamellenkupplung an der Stirnseite des Abstandselements, das dem zweiten Flansch zugewandt ist, einen Kontaktbereich aufweisen, der zu einem Anschlagen des zweiten Flansches ausgebildet ist. Dazu kann der Kontaktbereich beispielsweise aus einem gehärteten Werkstoff ausgebildet sein. Alternativ oder ergänzend kann im Kontaktbereich auch eine Beschichtung angebracht sein. Eine solche Beschichtung kann aus einem Gummi oder gummiartigen Werkstoff hergestellt sein, der eine Geräuschdämpfung bietet.

Ferner kann das Abstandselement im Wesentlichen ringförmig oder C-förmig ausgebildet sein. Ein ringförmiges Abstandselement, auch Abstandsring genannt, bietet eine einfache Montage und Herstellung. Ferner ist durch ringförmige Abstandselemente auch bei Lamellenkupplungen mit einer Vielzahl an Verbindungen zwischen der Lamelle und einem oder beiden Flanschen eine gleichmäßige Massenverteilung um eine Drehachse der Lamellenkupplung gewährleistet. Eine gleichmäßige Massenverteilung um die Drehachse der Lamellenkupplung führt zu einer minimierten Unwucht und zu einem verbesserten Rundlaufverhalten der Lamellenkupplung. Die beanspruchte Lösung kann damit bei einer Nachrüstung einer bestehenden Lamellenkupplung ohne die Gefahr einer Verschlechterung von deren Rundlaufeigenschaften umgesetzt werden. Ferner sind ringförmige Abstandselemente in einfacher Form anpassbar. Ein im Wesentlichen C-förmiges Abstandselement bietet eine Gewichtsersparnis, so dass insbesondere die rotierende Masse einer Lamellenkupplung durch ein oder mehrere entsprechende Abstandselemente nur geringfügig erhöht wird. Ferner sind im Wesentlichen C-förmige Abstandselemente in Axialrichtung mit reduziertem Kraftaufwand verformbar, und somit einfach montierbar. Unter einem im Wesentlichen C-förmig ist hierbei jegliche Form des Abstandselements zu verstehen, die einen Formschluss in Radialrichtung erlaubt.

In der beanspruchten Lamellenkupplung kann das Abstandselement aus einem Stahl, also einer Stahllegierung, einem Kunststoff oder einem Weichmetall hergestellt sein. Stahl bietet ein hohes Maß an mechanischer Beanspruchbarkeit und damit eine erhöhte Lebensdauer. Ein Abstandselement aus Kunststoff ist kosteneffizient herstellbar und bietet als Anschlag für den zweiten Flansch ein besonderes Maß an Geräuschdämpfung. Kunststoffe weisen üblicherweise gegenüber metallischen Werkstoffen eine reduzierte Härte auf. Eine Beschädigung der Lamelle oder des Lamellenpaketrings durch das Abstandselement wird durch die Verwendung von Kunststoff minimiert. Zusätzlich gewährleistet ein Abstandselement aus Kunststoff eine elektrische Isolierung. Ebenso bietet ein Abstandselement aus Weichmetall eine Geräuschdämpfung und gegenüber Kunststoff eine erhöhte Beanspruchbarkeit. Unter Weichmetall sind hierbei beispielsweise Materialien wie Bronze, Messing, Aluminium, Kupfer oder eine Aluminium- bzw. Kupfer-Legierung zu verstehen. Des Weiteren kann das Abstandselement auch in Differentialbauweise aus einer Mehrzahl von Komponenten hergestellt sein, die aus entsprechenden unterschiedlichen Materialien hergestellt werden.

Des Weiteren kann die beanspruchte Lamellenkupplung eine Hülse und/oder einen Fangring aufweisen. Die Lamelle kann dabei über die Hülse und/oder den Fangring mit dem ersten Flansch verspannt sein. Zusätzlich oder alternativ kann die Lamelle auch über den Lamellenpaketring mit dem ersten Flansch verspannt sein. Hierzu wird durch die Mutter, die auf der Schraube angebracht ist, eine Spannkraft in Axialrichtung ausgeübt, die durch mechanischen Kontakt durch den Fangring, das Lamellenpaket und/oder die Hülse zum ersten Flansch und einen Schraubenkopf der Schraube geleitet wird. In einer Ausführungsform der Lammellenkupplung erfolgt ein Kraftfluss von der Mutter zum daran anliegenden Fangring, zum Lamellenpaket mit der Lamelle und den Lamellenpaketringen zum ersten Flansch und zur Schraubenkopf der Schraube. Dabei ist die Hülse im Wesentlichen konzentrisch in der Lamelle und den Lamellenpaketringen aufgenommen und weist eine geringere axiale Abmessung auf als das Lamellenpaket. Dadurch wird der Kraftfluss von der Mutter zum ersten Flansch um die Hülse herumgeleitet.

In einer weiteren Ausführungsform der Lamellenkupplung weist die Mutter, die an der Schraube angebracht ist, einen Kragen auf. Der Kragen ist derart ausgebildet, dass dieser bei einer zweiten Axialbewegung des zweiten Flansches ein Abstützen der Mutter am zweiten Flansch erlaubt. Der Kragen weist hierzu einen entsprechenden Außendurchmesser auf. Die zweite Axialbewegung, gegen die die Mutter sich gegen den zweiten Flansch abstützt, ist dabei der ersten Axialbewegung, die vom Abstandselement abgestützt wird, entgegengesetzt.

Darüber hinaus kann in der Lamellenkupplung das Abstandselement als Tellerfeder ausgebildet sein. Hierdurch kann die erste Axialbewegung, bei der sich die Flansche einander annähern, abgefedert werden, und so die Geräuschentwicklung gegenüber einem harten, also ungefederten, Anschlagen verringert werden. Dadurch wird der Verschleiß am Abstandselement weiter reduziert und so die Lebensdauer des Abstandselements erhöht. Tellerfedern sind mit einer breiten Spanne an Federeigenschaften einfach verfügbar und sind kosteneffizient.

Ferner kann zwischen dem ersten und zweiten Flansch eine Mehrzahl an Lamellen und zugeordneten Lamellenpaketringen angeordnet sein. Die Lamellenpaketringe und die Lamellen sind dabei in axialer Richtung abwechselnd hintereinander angeordnet. Bei Verwendung einer Mehrzahl an Lamellen ist das Abstandselement vorzugsweise an der Lamelle angeordnet, die dem zweiten Flansch am nächsten positioniert ist. Die beanspruchte Lösung ist damit für Lamellenkupplungen unterschiedlicher Größenordnungen geeignet.

In der beanspruchten Lamellenkupplung kann die Lamelle auch über eine zweite Lamellenbohrung verfügen. Die Lamelle ist dabei an der zweiten Lamellenbohrung mit einer Schraube versehen, die dazu ausgebildet die Lamelle im Bereich der zweiten Lamellenbohrung am zweiten Flansch zu befestigen. Hierzu ist die Schraube in der zweiten Lamellenbohrung aufgenommen und im zweiten Flansch aufgenommen. An einer Stirnseite der Lamelle, die dem ersten Flansch zugewandt ist, ist ferner ein Abstandselement angeordnet. Das Abstandselement ist dazu ausgebildet, eine Axialbewegung des ersten Flansches abzustützen. Die Verbindung zwischen der Lamelle und dem zweiten Flansch an der zweiten Lamellenbohrung entspricht im Wesentlichen einer symmetrischen Spieglung der Verbindung zwischen der Lamelle und dem ersten Flansch an der ersten Lamellenbohrung. Ferner können die Verbindungen zwischen der Lamelle und den Flanschen an unterschiedlichen Lamellenbohrungen auch in Umfangsrichtung betrachtet alternierend, also abwechselnd, angeordnet sein.

Die zugrundeliegende Aufgabenstellung wird auch durch die erfindungsgemäße Industrieapplikation gelöst. Die Industrieapplikation umfasst einen Antrieb, der mit einer Ausgangswelle versehen ist. Der Antrieb kann als Motor, beispielsweise als Elektromotor, ausgebildet sein und die Ausgangswelle ist dazu ausgebildet, die vom Antrieb abgegebene Antriebsleistung weiterzuleiten. Darüber hinaus umfasst die Industrieapplikation eine mechanische Anwendung, die über eine Eingangswelle verfügt. Die Eingangswelle ist dazu ausgebildet, der mechanischen Anwendung die notwendige Antriebsleistung zuzuführen. Die mechanische Anwendung kann beispielsweise eine Mühle, Vertikalmühle, ein Erz- oder Gesteinsbrecher, ein Extruder, ein Förderanlage, eine Pumpe, ein Lüfter, ein Kompressor oder ein Kran sein. Die Ausgangswelle und die Eingangswelle sind dazu über eine Lamellenkupplung miteinander verbunden, die eine Übertragung von Antriebsleistung, also Drehmoment und Drehzahl, von der Ausgangswelle des Antriebs auf die Eingangswelle der mechanischen Anwendung gewährleistet. Die Lamellenkupplung ist hierzu gemäß zumindest einer der oben beschriebenen Ausführungsformen ausgebildet.

Die Erfindung wird im Folgenden anhand einzelner Ausführungsformen beschrieben. Die Merkmale der einzelnen Ausführungsformen sind dabei untereinander kombinierbar. Die Figuren sind insoweit in gegenseitiger Ergänzung zu lesen, dass gleiche Bezugszeichen in den Figuren auch die gleiche technische Bedeutung haben. Es zeigt im Einzelnen:
- FIG 1: eine Schrägansicht einer Ausführungsform einer Lamellenkupplung gemäß dem Stand der Technik in einer teilweisen Explosionsdarstellung;
- FIG 2: eine Längsschnittansicht einer Detailansicht einer Ausführungsform der beanspruchten Lamellenkupplung;
- FIG 3, 4: eine erste Ausführungsform eines Abstandselements in Stirn- und Schnittansicht;
- FIG 5, 6: eine zweite Ausführungsform eines Abstandselements in Stirn- und Schnittansicht;
- FIG 7, 8: eine dritte Ausführungsform eines Abstandselements in Stirn- und Schnittansicht;
- FIG 9: eine schematische Darstellung einer Ausführungsform einer erfindungsgemäßen Industrieapplikation.

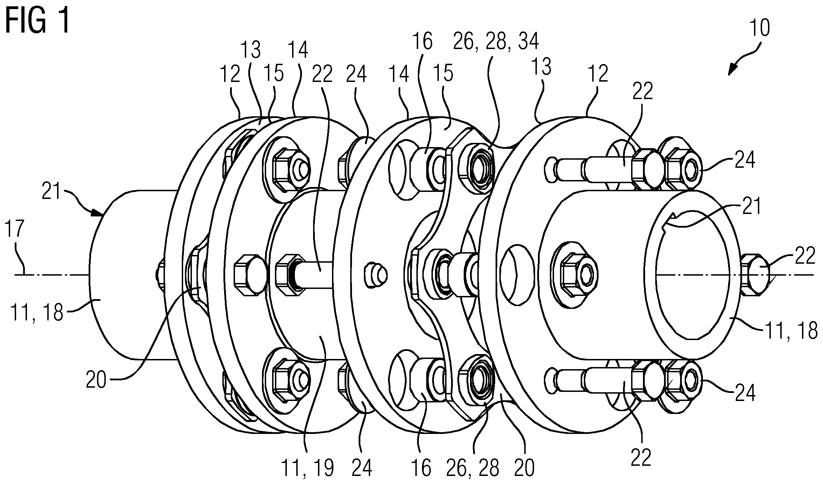

FIG 1 zeigt schematisch eine Ausführungsform einer bekannten Lamellenkupplung 10 in einer teilweisen Explosionsdarstellung in Schrägansicht. Die Lamellenkupplung 10 umfasst Kupplungskomponenten 11, die entlang einer Drehachse 17 axial hintereinander angeordnet sind. Die Kupplungskomponenten 11 umfassen Achsanschlussteile 18 und eine dazwischen angeordnete Zwischenhülse 19. In den Achsanschlussteilen 18 sind Passfedernuten 21 ausgebildet, die eine Drehmomentübertragung auf die Lamellenkupplung 10 gewährleisten. An zwischen den Achsanschlussteilen 18 und der Zwischenhülse 19 besteht jeweils eine Flanschverbindung, die jeweils einen ersten Flansch 12 und einen zweiten Flansch 14 umfasst. Dabei umfasst der erste Flansch 12 eine erste Stirnfläche 13 und der zweite Flansch 14 eine zweite Stirnfläche 15. Die ersten und zweiten Stirnflächen 13, 15 stehen sich im montierten Zustand jeweils gegenüber. Zwischen den Stirnflächen 13, 15 des ersten und zweiten Flansches 12, 14 ist eine Lamelle 20 angeordnet. Zumindest eine Lamelle 20 weist eine Mehrzahl an Lamellenbohrungen 28 auf, in denen jeweils eine Axialbuchse 34 und Lamellenpaketringe 26 aufgenommen sind. In jeder Lamellenbohrung 28 ist eine Schraube 22 aufgenommen, auf der wiederum ein Fangring 16 angeordnet ist. Die Fangringe 16 werden jeweils auf der Schraube 22 mit einer Mutter 24 verspannt. Durch die Ausrichtung der Schrauben 22 werden abwechselnd benachbarte Lamellenbohrungen 28 mit dem ersten oder zweiten Flansche 12, 14 verspannt. Dadurch wird über die Lamelle 20 eine drehmomentübertragende Verbindung zwischen dem ersten und zweiten Flansch 12, 14 bereitgestellt. Die Lamellen 20 sind biegeweich ausgebildet und damit dazu geeignet, bei einem Wellenversatz gelenkartig eine geringe Rückstellkraft auszuüben. Durch ein Zusammenwirken von zwei solcher Gelenke erfolgt ein Ausgleich eines radialen Wellenversatzes.

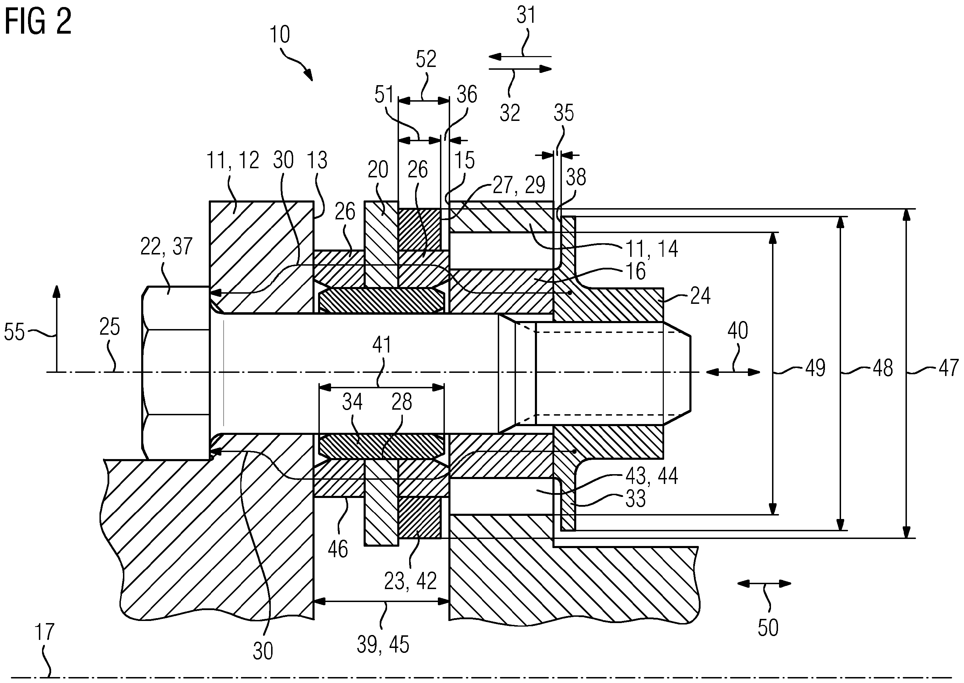

In FIG 2 ist schematisch eine Detailansicht einer Ausführungsform der beanspruchten Lamellenkupplung 10 abgebildet. Die Lamellenkupplung 10 umfasst Kupplungskomponenten 11, an denen ein erster bzw. zweiter Flansch 12, 14 ausgebildet ist. Zwischen sich gegenüberliegenden Stirnflächen 13, 15 der Flansche 12, 14 ist eine Lamelle 20 angeordnet, die dazu ausgebildet ist, zwischen den Flanschen 12, 14 eine Drehmomentübertragung zu gewährleisten. Die Lamelle 20 gehört zu einem Lamellenpaket 39, das Lamellenpaketringe 26 umfasst, die jeweils zwischen der Lamelle 20 und dem gegenüberliegenden ersten bzw. zweiten Flansch 12, 14 positioniert sind. In der Lamelle 20 ist ferner in einer Lamellenbohrung 28eine Axialbuchse 34 aufgenommen, die wiederum auf einer Schraube 22 angebracht ist. Ferner ist an einem Ende der Schraube 22 eine Mutter 24 angebracht, die als Sondermutter mit einem Kragen 33 ausgebildet ist. Über die Mutter 24 wird ein daran anliegender Fangring 16 gegen einen Lamellenpaketring 16 verspannt. Dadurch wird ein Kraftfluss 30 hervorgerufen, der von der Mutter 24 durch den Fangring 16, die Lamellenpaketringe 26, die Lamelle 20 die Stirnfläche 13 des ersten Flansches 12 und den ersten Flansch 12 selbst zu einem Schraubenkopf 37 der Schraube 22 verläuft. Die Axialbuchse 34 weist eine Axiallänge 41 auf, die eine Axialdistanz 45 zwischen den Stirnflächen 13, 14 des ersten und zweiten Flansches 12, 14 unterschreitet. Infolge dieses Aufbaus wird die Axialbuchse 34 vom Kraftfluss 30 umgangen und ist in einem bestimmungsgemäßen Zustand entlang einer Schraubenachse 25 kräftefrei. Die Schraubenachse 25 ist dabei im Wesentlichen parallel zu einer Drehachse 17 der Lamellenkupplung ausgerichtet. Entsprechend ist bezogen auf die Schraubenachse 25 eine Radialrichtung gemäß dem Pfeil 55 aufzufassen.

Der Fangring 16 ist ein einer Ausnehmung 43 im zweiten Flansch 14 positioniert. Zwischen dem Fangring 16 und dem zweiten Flansch 14 ist somit ein lichter Zwischenraum 44 ausgebildet, so dass durch den Fangring 16 keine Kraftübertragung auf den zweiten Flansch 14 erfolgt. Des Weiteren ist die Mutter 24 auf einer der Lamelle 20 abgewandten Seite des zweiten Flansches 14 angeordnet. Zwischen dem Kragen 33 und dem zweiten Flansch 14 besteht im bestimmungsgemäß montierten Zustand ein Kragenspiel 35 entlang der Schraubenachse 25. Auch zwischen der Mutter 24 und dem zweiten Flansch 14 erfolgt im bestimmungsgemäß montierten Zustand, der auch frei von Axialkräften 40 ist, keine Kraftübertragung.

Zwischen der Lamelle 20 und der Stirnfläche 15 des zweiten Flansches 14 ein Abstandselement 23 angeordnet, dass als Axialversatzanschlag 42 dient. Das Abstandselement 23 ist im Wesentlichen ringförmig ausgebildet und ist auf einer radialen Außenfläche 46 des Lamellenpaketrings 26 angeordnet, der zwischen der Stirnfläche 15 des zweiten Flansches 14 und der Lamelle 20 liegt. Das Abstandselement 23 weist einen Außendurchmesser 47 auf, so dass auf einer Stirnseite 27 des Abstandselements 23 eine Kontaktbereich 29 ausgebildet ist, der zu einem Anschlagen zumindest eines Teils der Stirnfläche 15 des zweiten Flansches 14 geeignet ist. Bei einer Axialkraft 40, die den zweiten Flansch 14 an den ersten Flansch 12 annähert, also einer ersten Axialbewegung 31 zwischen den Flanschen 12, 14, wird durch das Anschlagen der zweiten Flansches 14 am Kontaktbereich 29 des Abstandselements 23 entsprechend ein Axialversatz 50 zwischen den Flanschen 12, 14 entsprechend begrenzt. Bei einer Axialkraft 40 auf den zweiten Flansch 14, die die Flansche 12, 14 voneinander entfernt, also bei einer zweiten Axialbewegung 32, die der ersten Axialbewegung 31 entgegen gerichtet ist, erfolgt ein Anschlagen des zweiten Flansches 14 an den Kragen 33 der Mutter 24. Der Kragendurchmesser 48, also der Außendurchmesser der Mutter 24, überragt hierzu den Ausnehmungsdurchmesser 49 der Ausnehmung 43 im zweiten Flansch 14.

Das Abstandselement 23 weist eine Axialabmessung 51 auf, die geringer ist als ein axialer Abstand 52 zwischen der Lamelle 20 und der Stirnseite 15 des zweiten Flanschs 14, so dass zwischen dem Abstandselement 23 und der Stirnfläche 15 des zweiten Flanschs 14 ein Axialspiel 36 vorliegt. Das Abstandselement 23 ist ferner derart dimensioniert, dass es auf dem Lamellenpaketring 26 axial beweglich ist. Gleichermaßen ist am zweiten Flansch 14 ein Kragenanschlag 38 ausgebildet, der dazu geeignet ist, bei einer zweiten Axialbewegung 32 den Kragen 33 abzustützen und so einen entsprechenden Axialversatz 50 zu begrenzen. Durch den Kontaktbereich 29 und den Kragenanschlag 38 werden Axialkräfte 40 entlang der ersten bzw. zweiten Axialbewegung 31, 32 gezielt aufgenommen. Dazu ist das Abstandselement 23 aus einem entsprechenden Material, beispielsweise einem Stahl, einem Weichmetall oder einem Kunststoff hergestellt. Das Abstandselement 23 ist durch die Wahl des entsprechenden Materials darauf anpassbar, einer hohen Anzahl an Anschlägen im Kontaktbereich 29 standzuhalten, und/oder ein hohes Maß an Geräuschdämpfung zu bieten. Das Abstandselement 23 ist in einfacher und wirtschaftlicher Weise herstellbar und dadurch vorteilhaft als Verschleißteil nutzbar. Dadurch, dass das Abstandselement 23 im Wesentlichen radial außen auf dem Lamellenpaketring 26 anliegt, ist es platzsparend und auch im Rahmen einer Nachrüstung in eine bestehende Lamellenkupplung 10 einbaubar.

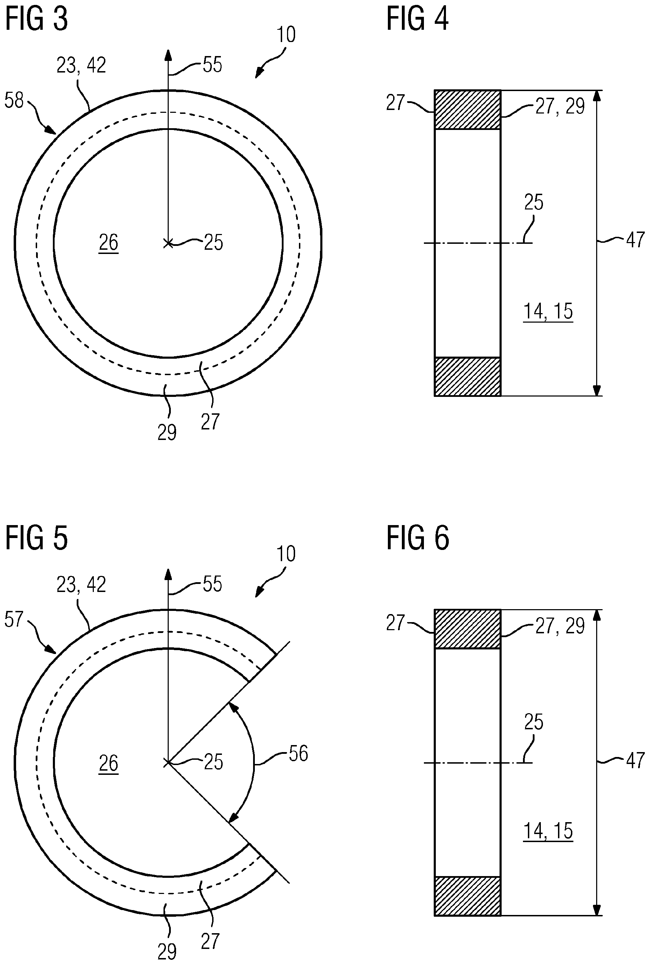

FIG 3 und FIG 4 zeigen eine erste Ausführungsform eines Abstandselements 23, das in der beanspruchten Lamellenkupplung 10 zur Axialversatzanschlag 42 einsetzbar ist. Das Abstandselement 23 weist dazu eine Ringform 58 auf. In einem radial äußeren Bereich auf einer Stirnseite 27 des Abstandselements 23, die im montierten Zustand einer Stirnfläche 15 eines zweiten Flansches 14 zugewandt ist, ein Kontaktbereich 29 ausgebildet. Der Kontaktbereich 29 ist dazu geeignet, die Stirnfläche 15 des zweiten Flansches 14 abzustützen. Die Größe des Kontaktbereichs 29 ist unter anderem durch den Außendurchmesser 47 des Abstandselements 23 definiert. Unter einer Radialrichtung ist dabei bezogen auf eine Schraubenachse 25 eine Richtung gemäß Pfeil 55 zu verstehen.

In FIG 5 und FIG 6 ist schematisch eine zweite Ausführungsform eines Abstandselements 23, das in der beanspruchten Lamellenkupplung 10 als Axialversatzanschlag 42 einsetzbar ist. Analog zu FIG 3 weist das Abstandselement 23 eine Stirnseite 27 auf, deren radial äußerer Bereich als Kontaktbereich 29 für ein Anschlagen einer Stirnfläche 15 eines zweiten Flansches 14 ausgebildet ist. Unter einer Radialrichtung ist hierbei eine Richtung gemäß Pfeil 55 zu verstehen. Gleichermaßen wird die Größe des Kontaktbereichs 29 unter anderem durch einen Außendurchmesser 47 des Abstandselements 23 definiert. Bezogen auf eine Schraubenachse 25 ist das Abstandselement 23 in einem Öffnungswinkel 56 unterbrochen ausgebildet und weist somit im Wesentlichen eine C-Form 57 auf. Der Öffnungswinkel 56 ist derart ausgebildet, dass das Abstandselement 23 auf einem Lamellenpaketring 26 formschlüssig anbringbar ist.

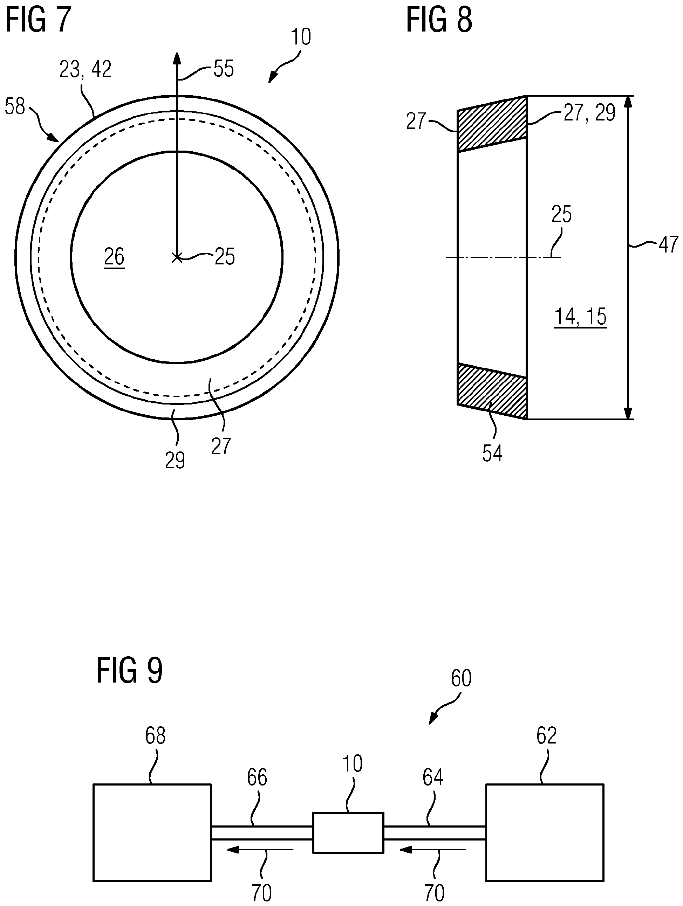

FIG 7 und FIG 8 zeigen eine dritte Ausführungsform eines Abstandselements 23, das in der beanspruchten Lamellenkupplung 10 zur Axialversatzanschlag 42 einsetzbar ist. Das Abstandselement 23 weist dazu eine Ringform 58 auf. In einem radial äußeren Bereich auf einer Stirnseite 27 des Abstandselements 23, die im montierten Zustand einer Stirnfläche 15 eines zweiten Flansches 14 zugewandt ist, ein Kontaktbereich 29 ausgebildet. Der Kontaktbereich 29 ist dazu geeignet, die Stirnfläche 15 des zweiten Flansches 14 abzustützen. Die Größe des Kontaktbereichs 29 ist unter anderem durch den Außendurchmesser 47 des Abstandselements 23 definiert. Unter einer Radialrichtung ist dabei bezogen auf eine Schraubenachse 25 eine Richtung gemäß Pfeil 55 zu verstehen. Darüber hinaus ist das Abstandselement 23 als Tellerfeder 54 ausgebildet.

FIG 9 zeigt schematisch den Aufbau einer beanspruchten Industrieapplikation 60, die einen Antrieb 62 und eine mechanische Anwendung 68 umfasst. Der Antrieb 62 weist eine Ausgangswelle 64 auf, die dazu ausgebildet ist, Antriebsleistung 70 zu übertragen, die vom Antrieb 62 bereitgestellt wird. Ferner ist die mechanische Anwendung 68 mit einer Eingangswelle 66 ausgestattet, die dazu ausgebildet ist, die bereitgestellt Antriebsleistung 70 der mechanischen Anwendung 68 zur Verfügung zu stellen. Die Ausgangswelle 64 und die Eingangswelle 66 sind dazu über eine Lamellenkupplung 10 miteinander verbunden. Die Lamellenkupplung 10 ist hierzu gemäß einer der beschriebenen Ausführungsformen ausgebildet.

## Patentansprüche

1. Lamellenkupplung (10), umfassend einen ersten und einen zweiten Flansch (12, 14), die über eine Lamelle (20) drehmomentübertragend miteinander verbunden sind, und die Lamelle (20) an einer ersten Lamellenbohrung (28) mit dem ersten Flansch (12, 14) über eine Schraube (22) verspannt ist, wobei an der Lamelle (20) ein Abstandselement (23) zu einem Abstützen einer ersten Axialbewegung (31) des zweiten Flanschs (14) angeordnet ist, **dadurch gekennzeichnet, dass** das Abstandselement (23) zwischen der Lamelle (20) und dem zweiten Flansch (14) axial beweglich ausgebildet ist.

2. Lamellenkupplung (10) nach Anspruch 1, **dadurch gekennzeichnet, dass** das Abstandselement (23) radial an einem Lamellenpaketring (26) angeordnet ist.

3. Lamellenkupplung (10) nach Anspruch 1 oder 2, **dadurch gekennzeichnet, dass** an einer Stirnseite (27) des Abstandselements (23) ein Kontaktbereich (29) für ein Anschlagen des zweiten Flanschs (14) ausgebildet ist.

4. Lamellenkupplung (10) nach einem der Ansprüche 1 bis 3, **dadurch gekennzeichnet, dass** das Abstandselement (23) im ringförmig oder C-förmig ausgebildet ist.

5. Lamellenkupplung (10) nach einem der Ansprüche 1 bis 4, **dadurch gekennzeichnet, dass** das Abstandselement (23) aus einem Stahl, einem Kunststoff oder einem Weichmetall hergestellt ist.

6. Lamellenkupplung (10) nach einem der Ansprüche 1 bis 5, **dadurch gekennzeichnet, dass** die Lamelle (20) über einen Fangring (16) und/oder den Lamellenpaketring (26) mit dem ersten Flansch (12) verspannt ist.

7. Lamellenkupplung (10) nach einem der Ansprüche 3 bis 6, **dadurch gekennzeichnet, dass** die Mutter (24) einen Kragen (33) zu einem Abstützen einer zweiten Axialbewegung (32) des zweiten Flanschs (14) aufweist.

8. Lamellenkupplung (10) nach Anspruch 1 bis 7, **dadurch gekennzeichnet, dass** das Abstandselement (23) als Tellerfeder (54) ausgebildet ist.

9. Lamellenkupplung (10) nach einem der Ansprüche 1 bis 8, **dadurch gekennzeichnet, dass** zwischen den ersten und zweiten Flansch (12, 14) eine Mehrzahl an Lamellen (20) und zugeordneten Lamellenpaketringen (26) angeordnet ist.

10. Lamellenkupplung (10) nach einem der Ansprüche 1 bis 9, **dadurch gekennzeichnet, dass** die Lamelle (20) an einer zweiten Lamellenbohrung (28) mit dem zweiten Flansch (14) über eine Schraube (22) verspannt ist, und an einer Stirnseite (15) des zweiten Flanschs (14) ein Abstandselement (23) zu einem Abstützen einer Axialbewegung (31, 32) des ersten Flanschs (12) angeordnet ist.

11. Lamellenkupplung (10) nach Anspruch 10, **dadurch gekennzeichnet, dass** die Lamelle (20) an den Lamellenbohrungen (28) entlang einer Umfangsrichtung alternierend mit dem ersten und zweiten Flansch (12, 14) verbunden ist.

12. Industrieapplikation (60), umfassend einen Antrieb (62) der zu einem Weiterleiten einer Antriebsleistung (70) mit einer Ausgangswelle (64) versehen ist, und eine mechanische Anwendung (68), die zur Nutzung der Antriebsleistung (70) mit einer Eingangswelle (66) versehen ist, wobei die Ausgangswelle (64) und die Eingangswelle (66) mit einer Lamellenkupplung (10) drehmomentübertragend verbunden sind, **dadurch gekennzeichnet, dass** die Lamellenkupplung (10) nach einem der Ansprüche 1 bis 11 ausgebildet ist.

## Claims

1. Multi-plate clutch (10), comprising a first and a second flange (12, 14), which are connected to one another in a torque-transmitting manner by way of a plate fin (20), and the plate fin (20) is braced on a first lamellar bore (28) with the first flange (12, 14) by way of a screw (22), wherein a spacer element (23) is arranged on the plate fin (20) to support a first axial movement (31) of the second flange (14), **characterised in that** the spacer element (23) between the plate fin (20) and the second flange (14) is designed to be axially movable.

2. Multi-plate clutch (10) according to claim 1, **characterised in that** the spacer element (23) is arranged radially on a lamellar packet ring (26).

3. Multi-plate clutch (10) according to claim 1 or 2, **characterised in that** a contact area (29) for striking the second flange (14) is formed on a front side (27) of the spacer element (23).

4. Multi-plate clutch (10) according to one of claims 1 to 3, **characterised in that** the spacer element (23) is ring-shaped or C-shaped.

5. Multi-plate clutch (10) according to one of claims 1 to 4, **characterised in that** the spacer element (23) is produced from a steel, a plastic material or a soft metal.

6. Multi-plate clutch (10) according to one of claims 1 to 5, **characterised in that** the plate fin (20) is braced with the first flange (12) by way of a catch ring (16) and/or the lamellar packet ring (26).

7. Multi-plate clutch (10) according to one of claims 3 to 6, **characterised in that** the nut (24) has a collar (33) to support a second axial movement (32) of the second flange (14) .

8. Multi-plate clutch (10) according to claim 1 to 7, **characterised in that** the spacer element (23) is designed as a disc spring (54).

9. Multi-plate clutch (10) according to one of claims 1 to 8, **characterised in that** a plurality of plate fins (20) and assigned lamellar packet rings (26) is arranged between the first and second flange (12, 14).

10. Multi-plate clutch (10) according to one of claims 1 to 9, **characterised in that** the plate fin (20) is braced on a second lamellar bore (28) with the second flange (14) by way of a screw (22), and a spacer element (23) is arranged on a front side (15) of the second flange (14) to support an axial movement (31, 32) of the first flange (12).

11. Multi-plate clutch (10) according to claim 10, **characterised in that** the plate fin (20) on the lamellar bores (28) is connected alternately to the first and second flange (12, 14) along a circumferential direction.

12. Industrial application (60), comprising a drive (62) which is equipped with an output shaft (64) for transmitting a drive power (70), and a mechanical application (68) which is equipped with an input shaft (66) for using the drive power (70), wherein the output shaft (64) and the input shaft (66) are connected to a multi-plate clutch (10) in a torque-transmitting manner, **characterised in that** the multi-plate clutch (10) is designed according to one of claims 1 to 11.

## Revendications

1. Embrayage (10) à disque, comprenant un premier et un deuxième flasque (12, 14) qui sont reliés entre eux à transmission de couple par un disque (20) et le disque (20) est bloqué par une vis (22) en un premier trou (28) du disque par le premier flasque (12, 14), dans lequel sur le disque (20) est monté un élément (23) de mise à distance pour soutenir un premier déplacement (31) axial du deuxième flasque (14), **caractérisé en ce que** l'élément (23) de mise à distance est constitué mobile axialement entre le disque (20) et le deuxième flasque (14).

2. Embrayage (10) à disque suivant la revendication 1, **caractérisé en ce que** l'élément (23) de mise à distance est disposé radialement sur un anneau (26) de paquet de disques.

3. Embrayage (10) à disque suivant la revendication 1 ou 2, **caractérisé en ce que**, sur un côté (27) frontal de l'élément (23) de mise à distance, est constituée une région (29) de contact pour une butée du deuxième flasque (14).

4. Embrayage (10) à disque suivant l'une des revendications 1 à 3, **caractérisé en ce que** l'élément (23) de mise à distance est constitué annulairement ou en forme de C.

5. Embrayage (10) à disque suivant l'une des revendications 1 à 4, **caractérisé en ce que** l'élément (23) de mise à distance est en acier, en une matière plastique ou en un métal tendre.

6. Embrayage (10) à disque suivant l'une des revendications 1 à 5, **caractérisé en ce que** le disque (20) est bloqué, par l'intermédiaire d'une bague (16) de prise et/ou de l'anneau (26) de paquet de disques, avec la premier flasque (12).

7. Embrayage (10) à disque suivant l'une des revendications 3 à 6, **caractérisé en ce que** l'écrou (24) a un collet (33) pour soutenir un deuxième déplacement (32) axial du deuxième flasque (14).

8. Embrayage (10) à disque suivant la revendication 1 à 7, **caractérisé en ce que** l'élément (23) de mise à distance est constitué sous la forme d'un ressort (54) à disque.

9. Embrayage (10) à disque suivant l'une des revendications 1 à 8, **caractérisé en ce qu'**une pluralité de disques et d'anneaux (26) de paquet de disques associés est disposée entre le premier et le deuxième flasque (12, 14).

10. Embrayage (10) à disque suivant l'une des revendications 1 à 9, **caractérisé en ce que** le disque (20) est bloqué en un deuxième trou (28) de disque par le deuxième flasque (14) par l'intermédiaire d'une vis (22) et, sur un côté (15) frontal du deuxième flasque (14), est disposé un élément (23) de mise à distance pour soutenir un déplacement (31, 32) axial du premier flasque (12).

11. Embrayage (10) à disque suivant la revendication 10, **caractérisé en ce que** le disque (20) est, aux trous (28) de disque, relié suivant une direction périphérique en alternance avec le premier et le deuxième flasques (12, 14).

12. Application (60) dans l'industrie, comprenant un entraînement (62) pourvu, pour l'acheminement d'une puissance (70) d'entraînement, d'un arbre (64) de sortie et une application (68) mécanique qui, pour l'utilisation de la puissance (70) d'entraînement, est pourvue d'un arbre (66) d'entrée, l'arbre (64) de sortie et l'arbre (66) d'entrée étant reliés à transmission de couple par un embrayage (10) à disque, **caractérisé en ce que** l'embrayage (10) à disque est constitué suivant l'une des revendications 1 à 11.
